# EUROPEAN PATENT APPLICATION

(11) **EP 4 546 800 A1**
(43) Date of publication of application: **30.04.2025**
(21) Application number: 23829797.2
(22) Date of filing: 23.05.2023
(51) Int. Cl.: H04N 21/431, H04N 21/2187

(54) **COMMENT DISPLAY METHOD AND APPARATUS, ELECTRONIC DEVICE, AND COMPUTER READABLE MEDIUM**

(30) Priority: 27.06.2022 CN 202210737337
(71) Applicant: BEIJING YOUZHUJU NETWORK TECHNOLOGY CO. LTD., Beijing 101299 (CN)
(72) Inventor: YIN, Xiaolei, Beijing 100028 (CN); FAN, Jiajia, Beijing 100028 (CN); YU, Youjie, Beijing 100028 (CN); SUN, Menghan, Beijing 100028 (CN)
(74) Representative: Dentons UK and Middle East LLP
(86) International application number: PCT/CN2023/095707
(87) International publication number: WO 2024/001612

(57) **Abstract**

The present application discloses a comment display method and apparatus, an electronic device, and a computer readable medium. The method comprises: for a video playback page which is being displayed, displaying, on the video playback page, object identification information for objects to be displayed, and if target object identification information satisfying a preset condition is present in the object identification information, also displaying, on the video playback page, comment information corresponding to the target object identification information. In this way, a viewer of the video playback page can view the comment information without an additional operation; thus, the operation complexity for the viewer to view the comment information can be effectively reduced, and the user experience can be improved.

## Description

The present application claims the priority to the Chinese patent application No. 202210737337.5 entitled "COMMENT PRESENTATION METHOD AND APPARATUS, ELECTRONIC DEVICE, AND COMPUTER-READABLE MEDIUM" and filed with the China National Intellectual Property Administration on June 27, 2022, the entirety of which is incorporated into the present application by reference.

### TECHNICAL FIELD

The present application relates to the field of computer technology, and particularly, to a comment presentation method and apparatus, an electronic device, and a computer-readable medium.

### BACKGROUND

A live is an information network posting mode with a bidirectional communication process for making and posting information synchronously on site with occurrence and development of an event.

With the rapid development of live technology, the live has increasingly wide application fields. For example, in a live room, an anchor may recommend and explain some items to live-room viewers, such that these viewers can conduct item experience (for example, item purchase or item use) in the live room according to personal needs.

However, there are defects in some item explanation modes applied in the live room, resulting in poor user experience.

### SUMMARY

In order to solve the above technical problem, the present application provides a comment presentation method and apparatus, an electronic device, and a computer-readable medium, which can effectively improve the user experience.

In order to achieve the above objective, embodiments of the present application provide the following technical solutions:

An embodiment of the present application provides a comment presentation method, comprising:
presenting a video playback page, which comprises at least one piece of object identification information; wherein the object identification information is determined according to attribute information of an object to be presented corresponding to the video playback page; and
if target object identification information satisfying a preset condition exists in the at least one piece of object identification information, presenting, in the video playback page, comment information corresponding to the target object identification information; wherein the comment information is determined according to historical comment information of an object to be presented corresponding to the target object identification information.

In a possible implementation, the presenting, in the video playback page, comment information corresponding to the target object identification information comprises:
presenting, in a comment presentation area of the video playback page, the comment information corresponding to the target object identification information.

In a possible implementation, the comment presentation area comprises an evaluation element presentation area and a comment content presentation area;
the presenting comment information corresponding to the target object identification information comprises:
presenting, in the comment content presentation area, the comment information corresponding to the target object identification information; and
the method further comprises:
   presenting, in the evaluation element presentation area, element description information of the comment information.

In a possible implementation, a position of the comment presentation area in the video playback page is adjacent to a position of the target object identification information in the video playback page.

In a possible implementation, the at least one piece of object identification information is presented in a horizontal row in a preset order;
the position of the target object identification information in the video playback page is an edge position of the horizontal row; and
the position of the comment presentation area in the video playback page is above the position of the target object identification information in the video playback page.

In a possible implementation, the comment information corresponding to the target object identification information is determined according to at least one comment content satisfying a preset presentation condition in the historical comment information; and
the method further comprises:
in response to a trigger operation on the comment presentation area, presenting an object comment presentation page for the object to be presented corresponding to the target object identification information; wherein the object comment presentation page comprises the historical comment information of the object to be presented corresponding to the target object identification information.

In a possible implementation, the comment information corresponding to the target object identification information is determined according to comment information to be used;
the comment information to be used is extracted from the historical comment information of the object to be presented corresponding to the target object identification information; and
a semantic similarity between the comment information corresponding to the target object identification information and the comment information to be used satisfies a preset semantic similarity condition.

In a possible implementation, the comment information corresponding to the target object identification information is intercepted from the comment information to be used according to a preset presentation character number threshold; and a character number of the comment information corresponding to the target object identification information does not exceed the presentation character number threshold.

In a possible implementation, the comment information corresponding to the target object identification information comprises a semantic abstract extracted from the comment information to be used.

In a possible implementation, the comment information corresponding to the target object identification information comprises keywords extracted from the comment information to be used.

In a possible implementation, the comment information to be used is determined from at least one piece of similar comment information; the at least one piece of similar comment information is determined from the historical comment information of the object to be presented corresponding to the target object identification information; and a content similarity between any two pieces of the similar comment information satisfies a preset content similarity condition.

In a possible implementation, the comment information to be used is screened from the historical comment information of the object to be presented corresponding to the target object identification information according to at least one screening reference factor.

In a possible implementation, the comment information corresponding to the target object identification information comprises a plurality of comment contents to be presented; and
the presenting, in the video playback page, comment information corresponding to the target object identification information comprises:
playing back by turns, in the video playback page, the plurality of comment contents to be presented.

In a possible implementation, if object identification information of an object to be presented which is in a state of being explained exists in the at least one piece of object identification information, the target object identification information is the object identification information of the object to be presented which is in the state of being explained; and
if object identification information of an object to be presented which is in the state of being explained does not exist in the at least one piece of object identification information, the target object identification information is object identification information of an object to be presented satisfying a preset popularity condition, or the target object identification information is object identification information of an object to be presented satisfying a preset recommendation condition.

An embodiment of the present application further provides a comment presentation apparatus, comprising:
a video presentation unit, configured to present a video playback page, which comprises at least one piece of object identification information; wherein the object identification information is determined according to attribute information of an object to be presented corresponding to the video playback page; and
a comment presentation unit, configured to, if target object identification information satisfying a preset condition exists in the at least one piece of object identification information, present, in the video playback page, comment information corresponding to the target object identification information; wherein the comment information is determined according to historical comment information of an object to be presented corresponding to the target object identification information.

An embodiment of the present application further provides an electronic device, comprising: a processor and a memory, wherein the memory is configured to store instructions or a computer program; and the processor is configured to execute the instructions or the computer program in the memory to cause the electronic device to perform any implementation of the comment presentation method according to the embodiment of the present application.

An embodiment of the present application further provides a computer-readable medium having stored therein instructions or a computer program which, when executed on a device, cause(s) the device to perform any implementation of the comment presentation method according to the embodiment of the present application.

An embodiment of the present application further provides a computer program product, comprising a computer program carried on a non-transitory computer-readable medium, wherein the computer program comprises program codes for performing any implementation of the comment presentation method according to the embodiment of the present application.

Compared with the prior art, the embodiments of the present application have at least the following advantages:

In the technical solutions provided in the embodiments of the present application, for a video playback page which is being presented (for example, a live video), it is presented on the video playback page, not only object identification information for objects to be presented (for example, items), but also comment information corresponding to target object identification information satisfying a preset condition (for example, object identification information of an object to be presented which is in a state of being explained) if the target object identification information exists in the object identification information, such that a viewer of the video playback page can view the comment information on the premise that an additional operation does not need to be performed, and thus the operation complexity for the viewer to view the comment information can be effectively reduced, and it is advantageous to improve the user experience.

In addition, since the comment information is determined according to historical comment information of an object to be presented corresponding to the target object identification information, the comment information can represent experience feelings for the object to be presented of experiencers (for example, purchasers or users) of the object to be presented, and accordingly enabling a viewer of the video playback page to directly know the experience feelings from the video playback page, and then enabling the viewer to know these experience feelings on the premise that an additional operation does not need to be performed, and thus the viewer can better make a decision (for example, whether to experience the object to be presented corresponding to the target object identification information) based on the comment information without leaving the video playback page, and it is possible to effectively improve the user experience (for example, live-room item purchasing experience, and the like) of the viewer.

### BRIEF DESCRIPTION OF THE DRAWINGS

In order to more clearly illustrate the technical solutions in the embodiments of the present application or the prior art, the drawings that need to be used in the description of the embodiments or the prior art will be briefly described below, and it is apparent that the drawings in the following description are only some embodiments described in the present application, and for one of ordinary skill in the art, other drawings can be obtained according to these drawings on the premise that creative labor is not paid.
Fig. 1 is a flow diagram of a comment presentation method provided by an embodiment of the present application;
Fig. 2 is a schematic diagram of a video playback page provided by an embodiment of the present application;
Fig. 3 is a schematic diagram of a comment presentation area provided by an embodiment of the present application;
Fig. 4 is a schematic diagram of another comment presentation area provided by the embodiment of the present application;
Fig. 5 is a schematic diagram of another video playback page provided by an embodiment of the present application;
Fig. 6 is a schematic diagram of yet another video playback page provided by an embodiment of the present application;
Fig. 7 is a schematic diagram of yet another video playback page provided by an embodiment of the present application;
Fig. 8 is a schematic structural diagram of a comment presentation apparatus provided by an embodiment of the present application; and
Fig. 9 is a schematic structural diagram of an electronic device provided by an embodiment of the present application.

### DETAILED DESCRIPTION

The inventors have found in researches on live room shopping that, for a live room, an anchor in the live room usually verbally explains related information (for example, an experience consumption resource value and the like) of some items, such that a viewer in the live room basically decides whether to experience only according to the explanation content of the anchor, which easily causes the viewer to experience an item not as expected (for example, purchase an item different from the confirmed sample), and thus easily results in poor user experience of the viewer. The experience consumption resource value is used for representing a resource (for example, currency, points, working hours, a certain item, etc.) that the live-room viewer needs to consume when experiencing the item; and the embodiment of the present application does not limit the representation of the experience consumption resource value, which may be represented, for example, by means of price marking, or point exchange, or equivalent item exchange.

It should be noted that the embodiment of the present application does not limit the above "experience", which may be, for example, purchasing an item, using an item, or trying a sample, ······.

The inventors have also found that, for some experienced viewers in the live room, before these viewers make decisions (e.g. before they place orders), these viewers would leave a live video page and go to an item detail page for the above item to view experience evaluations given by some historical experience users for this item, such that these viewers can refer to these experience evaluations subsequently to assist them in making decisions. However, since there are defects in the mode of obtaining the experience evaluations (for example, the need to leave the live video page, the complexity in opening the item detail page, etc.), the user experience of these viewers is easily affected (for example, information of some items being explained in process in the live room is easily missed, etc.).

Based on the above findings, in order to solve the technical problem described in the background, an embodiment of the present application provides a comment presentation method, comprising: for a video playback page which is being presented (for example, a live video), it is presented on the video playback page, not only object identification information for objects to be presented (for example, items), but also comment information corresponding to target object identification information satisfying a preset condition (for example, object identification information of an object to be presented which is in a state of being explained) if the target object identification information exists in the object identification information, such that a viewer of the video playback page can view the comment information on the premise that an additional operation does not need to be performed, and thus the operation complexity for the viewer to view the comment information can be effectively reduced, and it is advantageous to improve the user experience.

In addition, since the comment information is determined according to historical comment information of an object to be presented corresponding to the target object identification information, the comment information can represent experience feelings for the object to be presented of experiencers (for example, purchasers or users) of the object to be presented, and accordingly enabling a viewer of the video playback page to directly know the experience feelings from the video playback page, and then enabling the viewer to know these experience feelings on the premise that an additional operation does not need to be performed, and thus the viewer can better make a decision (for example, whether to experience the object to be presented corresponding to the target object identification information) based on the comment information without leaving the video playback page, and it is possible to effectively improve the user experience (for example, live-room item purchasing experience, and the like) of the viewer.

It can be seen that, since the comment information corresponding to the target object identification information is directly displayed on the video playback page, the viewer of the video playback page can know the experience feelings for the object to be presented of experiencers (for example, purchasers) of the object to be presented corresponding to the target object identification information while viewing video data, such that the defects existing in the above experience evaluation obtaining process (for example, the need to leave the live video page, the complexity in opening the item detail page, etc.) can be effectively avoided, and thus the user experience (for example, the live room item purchasing experience, etc.) of the viewer can be effectively improved.

In addition, the embodiment of the present application does not limit an execution subject of the comment presentation method, for example, the comment presentation method provided in the embodiment of the present application may be performed by an electronic device, which includes but is not limited to, a smartphone, a tablet, a laptop, a personal digital assistant (PDA), and the like.

It can be understood that, before the technical solutions disclosed in the embodiments of the present disclosure are used, a user should be notified of a type, usage scope, usage scenario, etc. of personal information involved in the present disclosure in a proper manner according to related laws and regulations, and authorization from the user should be obtained. For example, in response to receiving an active request of the user, prompt information is sent to the user to explicitly prompt the user that an operation he requested to perform will need obtaining and using the personal information of the user. Therefore, this enables the user to autonomously select, according to the prompt information, whether to provide the personal information to software or hardware such as an electronic device, an application program, a server, or a storage medium that performs the operation of the technical solution of the present disclosure. As an optional but non-limiting implementation, in response to receiving an active request of the user, the prompt information may be sent to the user, for example, in a manner of a pop-up window in which the prompt information may be presented in a manner of text. In addition, the pop-up window can also have carried therein a selection control for the user to select to "agree" or "disagree" to provide the personal information to the electronic device. It can be understood that the above notification and the process of obtaining the user authorization are only illustrative and not intended to limit the implementation of the present disclosure, and other manners that satisfy the related laws and regulations may be applied to the implementation of the present disclosure.

In order to make those skilled in the art better understand the solutions of the present application, the technical solutions in the embodiments of the present application will be clearly and completely described below in conjunction with the drawings in the embodiments of the present application, and it is apparent that the described embodiments are only a part of the embodiments of the present application, rather than all of them. Based on the embodiments in the present application, all other embodiments obtained by one of ordinary skill in the art on the premise that creative labor is not made fall within the scope of protection of the present application.

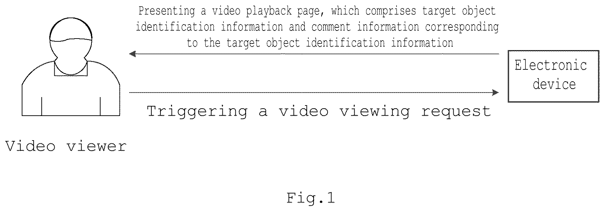

In order to better understand the technical solutions of the present application, at least a possible implementation for a comment presentation method is described below in conjunction with Fig. 1. Fig. 1 is a flow diagram of a comment presentation method according to an embodiment of the present application.

It should be noted that Fig. 1 only shows one possible trigger scenario for the comment presentation method provided in the embodiment of the present application, and the embodiment of the present application does not limit an actual trigger scenario for the comment presentation method. In addition, a "video viewing request" in Fig. 1 is used for requesting a video to be played on an electronic device of a video viewer (for example, on a video playback page hereinafter).

Based on Fig. 1, it can be seen that the comment presentation method provided in the embodiment of the present application at least comprises steps 11 to 12:
step 11: presenting a video playback page.

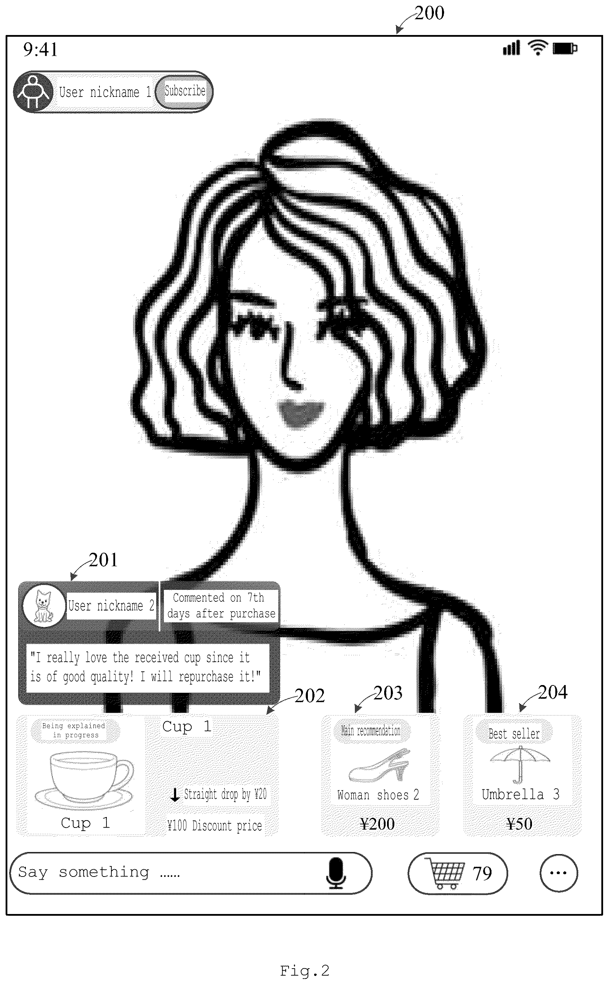

The video playback page refers to a playback area for one piece of video data. That is, one piece of video data may occupy all areas on the video playback page for presentation. In addition, the embodiment of the present application does not limit the video playback page, which may be, for example, a live video page (for example, a live video page 200 shown in Fig. 2) or a short video page.

The video playback page can be used for providing an explanation for at least one object to be presented. The object to be presented may be a trailer object in a live room, such as a trailer item. Generally, the trailer item may include at least four parts of items, wherein a first one may be an item that is being explained in process (for example, a cup 1 shown in Fig. 2), a second one may be an item that is not being explained in process, a third one may be an item with a higher purchase popularity (for example, an umbrella 3 with a mark Best seller shown in Fig. 2), and a fourth one may be an item that is mainly recommended by an anchor of a live room (for example, woman shoes 2 with a mark Main recommendation shown in Fig. 2). For the above four parts of items, a user can add the trailer items into his own shopping cart for more convenient shopping.

It should be noted that the embodiment of the present application does not limit the above items, which may be, for example, a commodity (for example, a cup, etc.) that can be purchased, or a service (for example, haircutting, etc.) that can be enjoyed.

The video playback page may be further used for presenting object identification information of at least one object to be presented. Object identification information of an n-th object to be presented is used for describing the n-th object to be presented, and the embodiment of the present application does not limit the object identification information, which may include, for example, state description information of the n-th object to be presented and introduction information of the n-th object to be presented. The introduction information of the n-th object to be presented is used for representing some conventional attributes (such as an item image, an item name, an item experience consumption resource value, an item discount, and the like) of the n-th object to be presented. The state description information of the n-th object to be presented is used for representing a state attribute (for example, whether it is in a state of being explained in progress, whether it belongs to a mainly recommended item, whether it belongs to a best seller item, or the like) the n-th object to be presented has at a current time.

To facilitate understanding of the above paragraph, the description is made below in conjunction with an example.

As an example, when the above n-th object to be presented is a cup 1 mentioned in Fig. 2, the object identification information of the n-th object to be presented may include information shown in an object presentation area 202 shown in Fig. 2. As can be seen, the object identification information of the n-th object to be presented may at least represent: the anchor in the live room being explaining the cup 1; an appearance of the cup 1 (i.e., a cup image shown in the object presentation area 202 in Fig. 2); an experience consumption resource value of the cup 1 (i.e., a string "¥100 Discount price" shown in Fig. 2); a discount (i.e. a string "straight drop by ¥20" shown in Fig. 2) of the cup 1.

In addition, the embodiment of the present application also does not limit the presentation mode of the object identification information, which may be implemented, for example, by using the information presentation mode shown in the object presentation area 202 shown in Fig. 2. Here, n is a positive integer, n≤N, N is a positive integer, and N represents the number of objects to be presented on the video playback page.

The object identification information of the above n-th object to be presented may be determined according to attribute information of the n-th object to be presented. The attribute information of the n-th object to be presented is used for representing some attributes related to the n-th object to be presented; and the embodiment of the present application does not limit the attribute information, for example, the attribute information of the n-th object to be presented may at least include the introduction information of the n-th object to be presented and the state description information of the n-th object to be presented.

Based on the related content of the above step 11, for one user, in some application scenarios (for example, after the user triggers a video viewing request on his electronic device, or after the anchor in the live room starts a live, or after the anchor in the live room starts to explain a certain object, etc.), the video playback page may be presented on the electronic device of the user, such that the user may, from the video playback page, obtain related information of one or more objects to be presented (for example, the above "object identification information" and the following "comment information", and the like), thus the user can make a decision (for example, whether to experience a certain object to be presented, etc.) according to the information presented on the video playback page.

Step 12: if target object identification information satisfying a preset condition exists in the above at least one piece of object identification information, presenting, in the video playback page, comment information corresponding to the target object identification information; wherein the comment information is determined according to historical comment information of an object to be presented corresponding to the target object identification information.

The preset condition may be preset, for example, in some cases (for example, when the viewer is, in the live room, expected to better know an item which is being explained), the preset condition may specifically include: the object to be presented corresponding to the object identification information is in a state of being explained in progress. It can be seen that, for the object identification information of the above n-th object to be presented, if it is determined that the n-th object to be presented is in the state of being explained in progress, it may be determined that the object identification information of the n-th object to be presented satisfies the preset condition, such that the object identification information of the n-th object to be presented may be determined as the target object identification information, thus both the object identification information of the n-th object to be presented and the comment information of the n-th object to be presented are concurrently presented on the above video playback page, and accordingly enabling the live-room viewer to better know, from the video playback page, the related information of the item which is being explained in process.

For another example, in other cases (for example, when the viewer is, in the live room, expected to better know a best seller item), the above preset condition may also include: the object to be presented corresponding to the object identification information has a popularity value reaching a preset popularity threshold (for example, the object to be presented belongs to a best seller item) . The popularity value is used for representing an enthusiasm level of consumers for the object to be presented; and the embodiment of the present application does not limit the process of determining the popularity value, which may be determined, for example, according to the amount of favorites, the amount of experiences (for example, the amount of purchases of a certain item), the amount of reposts, and the like of the object to be presented.

It can be seen that for the object identification information of the above n-th object to be presented, if it is determined that the n-th object to be presented has the popularity value reaching the preset popularity threshold, it may be determined that the n-th object to be presented belongs to a best seller item, and thus it may be determined that the object identification information of the n-th object to be presented satisfies the preset condition, and then the object identification information of the n-th object to be presented may be determined as the target object identification information, such that both the object identification information of the n-th object to be presented and the comment information of the n-th object to be presented are concurrently presented on the above video playback page, and accordingly enabling the live-room viewer to better know, from the video playback page, the related information of the best seller item.

For yet another example, in yet other cases (for example, when the viewer is, in the live room, expected to better know a mainly recommended item), the above preset condition may also include: the object to be presented corresponding to the object identification information has recommendation characterization data reaching a preset recommendation condition (for example, the object to be presented is marked as a mainly recommended item). The recommendation characterization data is used for describing recommendation strength of the anchor in the live room for the object to be presented; and the embodiment of the present application does not limit the process of determining the recommended characterization data, which may be determined, for example, according to an explanation duration of the anchor for the object to be presented, the number of times the anchor explains the object to be presented, and mark information (for example, a string "mainly recommended item") preset by the anchor for the object to be presented. In addition, the preset recommendation condition may be set in advance (for example, it may be that the object to be presented is marked as the mainly recommended item, etc.).

It can be seen that for the object identification information of the above n-th object to be presented, if it is determined that the n-th object to be presented has the recommendation characterization data reaching the preset recommendation condition, it may be determined that the n-th object to be presented belongs to the mainly recommended item, and thus it may be determined that the object identification information of the n-th object to be presented satisfies the preset condition, and then the object identification information of the n-th object to be presented may be determined as the target object identification information, such that both the object identification information of the n-th object to be presented and the comment information of the n-th object to be presented are concurrently presented on the above video playback page, and accordingly enabling the live-room viewer to better know, from the video playback page, the related information of the mainly recommended item.

The above target object identification information specifically refers to the object identification information satisfying the preset condition presented on the video playback page. For example, the target object identification information may be the information shown in the object presentation area 202 shown in Fig. 2. For another example, the target object identification information may also be information shown in an object presentation area 203 shown in Fig. 2. For yet another example, the target object identification information may also be information shown in an object presentation area 204 shown in Fig. 2.

In addition, the embodiment of the present application does not limit the process of determining the above target object identification information, for example, in some application scenarios (for example, when the viewer is, in the live room, most expected to better know an item which is being explained in progress, and secondly expected to better know a best seller item or a mainly recommended item), the process of determining the target object identification information may specifically comprise steps 21 to 22:

Step 21: if object identification information of an object to be presented which is in a state of being explained exists in the above at least one piece of object identification information, determining the object identification information of the object to be presented which is in the state of being explained as the target object identification information.

Step 22: if object identification information of an object to be presented which is in the state of being explained does not exist in the above at least one piece of object identification information, determining object identification information of an object to be presented satisfying a preset popularity condition as the target object identification information, or determining object identification information of an object to be presented satisfying a preset recommendation condition as the target object identification information.

The preset popularity condition may be set in advance, which may be, for example, the condition of "a popularity value of the object to be presented reaching a preset popularity threshold" shown above.

In addition, the preset recommendation condition may also be set in advance, which may be, for example, the condition of "recommendation characterization data of the object to be presented reaching a preset recommendation condition" shown above.

Based on the related content of the above steps 21 to 22, in some cases (for example, when the viewer is, in the live room, most expected to better know an item which is being explained in process, and secondly expected to better know a best seller item or a mainly recommended item), it may be first determined whether object identification information of an object to be presented which is in a state of being explained exists in the above "at least one piece of object identification information", and if so, it can be determined that the object identification information of the object to be presented which is in the state of being explained is presented in the above video playback page, and thus in order to facilitate the live-room viewer to better know the object to be presented which is in the state of being explained, the object identification information of the object to be presented which is in the state of being explained may be determined as the target object identification information, such that both the object identification information and comment information of the object to be presented which is in the state of being explained are concurrently presented on the video playback page, and accordingly enabling the viewer of the video playback page to, by comprehensively referring to the two pieces of information, make a decision (such as a decision of whether to experience or the like) for the object to be presented which is in the state of being explained; however, if not, it may be continuously determined whether object identification information of an object to be presented satisfying the preset popularity condition or object identification information of an object to be presented satisfying the preset recommendation condition exists in the at least one piece of object identification information, to obtain a determination result, so as to determine the target object identification information based on the determination result subsequently, such that both the target object identification information and the comment information corresponding to the target object identification information are concurrently presented on the video playback page, and accordingly enabling the viewer of the video playback page to, by comprehensively referring to the two pieces of information, make a decision for the object to be presented corresponding to the target object identification information (for example, the object to be presented satisfying the preset popularity condition or the object to be presented satisfying the preset recommendation condition).

The specific process of "determining the target object identification information based on the determination result" described above is as follows: if the above determination result represents that in the above "at least one piece of object identification information", the object identification information of the object to be presented satisfying the preset popularity condition exists, but the object identification information of the object to be presented satisfying the preset recommendation condition does not exist, the object identification information of the object to be presented satisfying the preset popularity condition can be determined as the target object identification information; if the above determination result represents that in the above "at least one piece of object identification information", the object identification information of the object to be presented satisfying the preset popularity condition does not exist, but the object identification information of the object to be presented satisfying the preset recommendation condition exists, the object identification information of the object to be presented satisfying the preset recommendation condition can be determined as the target object identification information; and if the above determination result represents that in the above "at least one piece of object identification information", the object identification information of the object to be presented satisfying the preset popularity condition exists, and the object identification information of the object to be presented satisfying the preset recommendation condition also exists, one piece of object identification information with a higher priority is selected from the object identification information of the object to be presented satisfying the preset popularity condition and the object identification information of the object to be presented satisfying the preset recommendation condition based on preset priority information, and is determined as the target object identification information.

The above priority information is used for representing a priority based on which each object identification information in the above "at least one piece of object identification information" is selected; and the embodiment of the present application does not limit the priority information, which may specifically be, for example: object identification information of an item object which is in the state of being explained has a higher priority than object identification information of an item object of a mainly recommended item type, and the object identification information of the item object of the mainly recommended item type has a higher priority than object identification information of an item object of a best seller item type.

The above comment information corresponding to the target object identification information is used for describing an experience feeling for the object to be presented of an experiencer of the object to be presented corresponding to the target object identification information. The experiencer refers to a person who has experienced the object to be presented (for example, a purchaser of the object to be presented, a user of the object to be presented, or the like) ; and the experiencer can convey his experience feeling by posting an experience evaluation for the object to be presented. It can be seen that the experience evaluation refers to a subjective evaluation given by the experiencer for the object to be presented, such that the experience evaluation can express a subjective feeling of the experiencer for the object to be presented.

It should be noted that the embodiment of the present application does not limit the posting manner of the above experience evaluation, for example, the experience evaluation is usually posted by the experiencer in a comment area of an item detail page corresponding to the object to be presented, such that others can view the experience evaluation from the comment area.

In addition, the embodiment of the present application does not limit the comment information corresponding to the above target object identification information, which may be, for example, an experience comment (for example, a string "I really love the received cup since it is of good quality! I will repurchase it!" shown in Fig. 2) posted by the experiencer for the object to be presented. For another example, it may also be a semantic abstract (for example, a string " The cup is of good quality! I will repurchase it!") extracted from the experience comment. For yet another example, it may be keywords (for example, a string "good quality") extracted from the experience comment. For yet another example, it may also be partial content (for example, the 10 characters that "I really love the received cup") intercepted from the experience comment, such that the interception result satisfies a display character threshold (for example, 10) set for the comment in the above video playback page.

In addition, the comment information corresponding to the target object identification information can be determined according to historical comment information of the object to be presented corresponding to the target object identification information. The historical comment information refers to experience evaluations posted by some experiencers for the object to be presented. It can be seen that, if it is in the comment area of the item detail page corresponding to the object to be presented that a large number of experiencers post the experience evaluations, the historical comment information may come from the comment area of the item detail page corresponding to the object to be presented, such that the historical comment information may include one or more comment contents appearing in the comment area.

In addition, the embodiment of the present application does not limit the process of determining the comment information corresponding to the above target object identification information, which may specifically comprise, for example, steps 31 to 32:
Step 31: extracting comment information to be used from the historical comment information of the object to be presented corresponding to the target object identification information.

The comment information to be used is used for representing comment contents extracted from the historical comment information of the object to be presented corresponding to the target object identification information; and the embodiment of the present application does not limit the number of pieces of the comment information to be used.

In addition, the embodiment of the present application does not limit the process of extracting the above comment information to be used (that is, the implementation of the step 31), which may be implemented, for example, based on a multi-factor screening mechanism. That is, the above step 31 may specifically be: screening the comment information to be used from the historical comment information of the object to be presented corresponding to the target object identification information according to at least one screening reference factor. For ease of understanding, the description is made below in conjunction with an example.

As an example, when the above "history comment information of the object to be presented corresponding to the target object identification information" includes at least one history comment content, the step 31 may specifically comprise steps 311 to 312:
Step 311: performing presentation probability prediction processing on respective historical comment contents by referring to at least one screening reference factor, to obtain presentation probabilities of respective historical comment contents.

An m-th history comment content refers to an m-th comment content recorded in the above "history comment information of the object to be presented corresponding to the target object identification information", such that the m-th history comment content can describe an experience feeling of a certain experiencer for the object to be presented. m is a positive integer, m≤M, M is a positive integer, and M represents the number of the historical comment contents.

The above "at least one screening reference factor" refers to a factor that need to be referred to when performing screening processing on a large number of comment contents; and the "at least one screening reference factor" may be adaptively set based on an application scenario. In addition, the embodiment of the present application does not limit the "at least one screening reference factor", which may include, for example, a comment posting time, comment acceptance characterization data (for example, the number of likes, etc.), comment emotion (for example, praise), and the like.

A presentation probability of the m-th historical comment content refers to a presentation probability prediction processing result for the m-th historical comment content by referring to the at least one screening reference factor, such that the presentation probability of the m-th historical comment content can represent a possibility that the m-th historical comment content is presented on the video playback page.

In addition, the embodiment of the present application does not limit the process of determining the presentation probability of the above m-th historical comment content, which may specifically be, for example: by referring to the at least one screening reference factor and using a preset probability prediction rule (or a pre-constructed machine learning model with a probability prediction processing function), performing presentation probability prediction processing on the m-th historical comment content to obtain the presentation probability of the m-th historical comment content. The probability prediction rule is used for stipulating a probability influence mechanism corresponding to each screening reference factor.

Step 312: determining the comment information to be used from at least one historical comment content according to a presentation probability of the at least one historical comment content.

In the embodiment of the present application, after the presentation probability of the at least one historical comment content is obtained, the presentation probabilities of these historical comment contents may be compared to determine a historical comment content with a presentation probability satisfying a probability threshold as the comment information to be used (for example, a historical comment content with a highest presentation probability may be determined as the comment information to be used, or the like). The probability threshold may be preset.

Based on the related contents of the above steps 311 to 312, it can be seen that in some application scenarios, by means of the multi-factor screening mechanism, the process of extracting the comment information to be used from the historical comment information of the object to be presented corresponding to the target object identification information may be realized, such that the comment information to be used can better represent an experience feeling of an experiencer for the object to be presented.

In fact, experience evaluations given by some experiencers are roughly the same, such that semantic contents of the experience evaluations are also roughly the same, and thus in order to better present experience feelings of the experiencers, aggregation presentation may be performed on these experience evaluations. Based on this, an embodiment of the present application further provides another possible implementation of the process of extracting the above comment information to be used (that is, the step 31), which may specifically comprise steps 41 to 42:
Step 41: determining at least one piece of similar comment information from the historical comment information of the object to be presented corresponding to the target object identification information, such that a content similarity between any two pieces of similar comment information satisfies a preset content similarity condition.

The above "at least one piece of similar comment information" refers to a group of comment contents having a similar semantic; and a content similarity between any two pieces of similar comment information in the "at least one piece of similar comment information" satisfies the preset content similarity condition. The preset content similarity condition may be set in advance, which may specifically be, for example: the content similarity is not less than a preset first similarity threshold.

The above "content similarity between two pieces of similar comment information" is used for representing a semantic similarity between the two pieces of similar comment information; and the embodiment of the present application does not limit the process of determining the "content similarity between two pieces of similar comment information", which may be implemented, for example, by using any existing or future method that can perform semantic similarity determination processing on two text contents.

Step 42: determining the comment information to be used from the at least one piece of similar comment information.

It should be noted that the embodiment of the present application does not limit the implementation of the step 42, which may specifically be, for example: randomly selecting one piece of comment information from the at least one piece of similar comment information, and determining the selected one piece of comment information as the comment information to be used. For another example, it may also be: screening the comment information to be used from the at least one piece of similar comment information by using the screening mechanism shown in the above steps 311 to 312. For yet another example, it may also be: screening the comment information to be used from the at least one piece of similar comment information according to a preset screening rule. The preset screening rule may be set in advance, which may be, for example: preferentially using a comment with a latest posting time.

Based on the related content of the above steps 41 to 42, it can be seen that in some application scenarios, by means of the comment aggregation mechanism, the process of extracting the comment information to be used from the historical comment information of the object to be presented corresponding to the target object identification information may be realized, such that the comment information to be used can better represent experience feelings common to a large number of experiencers for the object to be presented.

Based on the related content of the above comment information to be used, it can be seen that after the historical comment information of the object to be presented corresponding to the target object identification information is obtained, at least one comment content satisfying a preset presentation condition can be first extracted from one or more comment contents recorded by the historical comment information and then determined as the comment information to be used, such that the comment information to be used can represent experience feelings expressed by the extracted comment contents. The preset presentation condition refers to a condition according to which the comment information to be used is extracted, and the preset presentation condition may be set in advance, for example, the preset presentation condition may refer to the condition that the comment information to be used needs to satisfy, which is described in any implementation of the process of extracting the above comment information to be used.

It should be noted that, if Q comment contents can be played back by turns on the above video playback page, Q pieces of comment information to be used can be screened out by means of the step 31, such that the Q comment contents can be subsequently determined from the Q pieces of comment information to be used. A Q-th comment information to be used may be determined by using any implementation of the process of extracting the comment information to be used shown in the above step 31, which is not repeated here for brevity, where Q is a positive integer, Q≤Q, and Q is a positive integer.

Step 32: determining comment information corresponding to the target object identification information according to the comment information to be used, such that a semantic similarity between such comment information and the comment information to be used satisfies a preset semantic similarity condition.

The above "semantic similarity between such comment information and the comment information to be used" is used for describing a similarity between semantic information carried by such comment information and semantic information carried by the comment information to be used; and the embodiment of the present application does not limit the process of determining the "semantic similarity between such comment information and the comment information to be used", which is implemented, for example, by using any existing or future method that can perform semantic similarity determination processing on two text contents.

The preset semantic similarity condition may be set in advance, which may specifically be, for example: the semantic similarity reaches a preset second similarity threshold.

In addition, the embodiment of the present application does not limit the implementation of the step 32, and for ease of understanding, the description is made in conjunction with four examples.

In an example 1, the step 32 may specifically be: intercepting comment information corresponding to the target object identification information from the comment information to be used, according to a preset presentation character number threshold, such that a character number of the comment information does not exceed the presentation character number threshold. The presentation character number threshold refers to the display character threshold set for the comment in the above video playback page. For example, the presentation character number threshold may be 10.

It can be seen that in some application scenarios (for example, when there is no enough space available in the above video playback page), in order to better present the item comment on the video playback page, interception processing may be performed on the above comment information to be used (for example, the string "I really love the received cup since it is of good quality! I will repurchase it!") according to a preset presentation character number (for example, 10), to obtain the comment information (for example, the string "I really love the received cup") corresponding to the target object identification information, such that a character number of the comment information does not exceed the presentation character number threshold, and accordingly enabling the comment information to satisfy the display character threshold requirement set for the comment in the above video playback page, and thus page space occupied by the comment information is reduced as much as possible on the premise that the comment information corresponding to the target object identification information is presented on the video playback page.

Example 2, the step 32 may specifically be: performing semantic abstract extraction processing on the comment information to be used to obtain comment information corresponding to the target object identification information.

It can be seen that, in some application scenarios, in order to reduce the number of characters displayed in the comment as much as possible in the case of ensuring semantic integrity, semantic abstract extraction processing may be first performed on the comment information to be used (for example, the string "I really love the received cup since it is of good quality! I will repurchase it!") to obtain a semantic abstract extraction result (for example, the string "The cup is of good quality, and I will repurchase it!") ; and then the semantic abstract extraction result is determined as comment information corresponding to the target object identification information, such that the comment information is a semantic abstract extracted from the comment information to be used, and accordingly enabling the comment information to represent the semantic information carried by the comment information to be used in as few characters as possible, and thus the purpose of reducing the number of characters displayed in the comment as much as possible in the case of ensuring semantic integrity can be realized, and it is advantageous to improve the comment presentation effect.

It should be noted that the embodiment of the present application does not limit the implementation of the above "semantic abstract extraction processing", which may be implemented, for example, by using any existing or future semantic abstract extraction method.

Example 3, the step 32 may specifically be: performing keyword extraction processing on the comment information to be used to obtain comment information corresponding to the target object identification information.

It can be seen that, in some application scenarios, in order to reduce the number of characters displayed in the comment as much as possible, keyword extraction processing may be first performed on the comment information to be used (for example, the string "I really love the received cup since it is of good quality! I will repurchase it!") to obtain a keyword extraction result (for example, the string "good quality") ; and then the keyword extraction result is determined as comment information corresponding to the target object identification information, such that the comment information is keywords extracted from the comment information to be used, and accordingly enabling the comment information to represent main semantic information carried by the comment information to be used in as few characters as possible, and thus the purpose of reducing the number of characters displayed in a comment as much as possible can be realized, and it is advantageous to improve the comment presentation effect.

It should be noted that the embodiment of the present application does not limit the implementation of the above "keyword extraction processing", which may be implemented, for example, by using any existing or future keyword extraction method.

Example 4, when the number of pieces of the above comment information to be used is Q, the step 32 may specifically comprise steps 321 to 322:
Step 321: determining a q-th comment content to be presented according to a q-th piece of comment information to be used, such that a semantic similarity between the q-th comment content to be presented and the q-th piece of comment information to be used satisfies the preset semantic similarity condition. q is a positive integer, q≤Q, Q is a positive integer, and Q represents the number of pieces of the comment information to be used.

The q-th comment content to be presented refers to a comment content which is determined based on the q-th piece of comment information to be used and needs to be presented on the video playback page; and the process of determining the q-th comment content to be presented is similar to the process of determining the comment information corresponding to the target object identification information shown in the above examples 1 to 3, and for the sake of brevity, is not repeated here.

Step 322: performing collection processing on 1st to Q-th comment contents to be presented to obtain comment information corresponding to the target object identification information, such that such comment information comprises the 1st to Q-th comment contents to be presented.

Based on the related contents of the above steps 321 to 322, it can be seen that in some application scenarios (for example, when a plurality of comment contents may be played back by turns on the above video playback page), after a plurality of pieces of comment information to be used are obtained, each comment content to be presented can be first determined according to each piece of comment information to be used, such that these comment contents to be presented can represent experience feelings expressed by the comment information to be used; and then, collection processing is performed on these comment contents to be presented to obtain comment information corresponding to the target object identification information, such that the comment information can include these comment contents to be presented, so as to present these comment contents to be presented to the live-room viewer subsequently in a manner of presenting the comment information on the above video playback page, and accordingly enable the live-room viewer to directly know, from the video playback page, the experience feelings related to the object to be presented corresponding to the target object identification information, and thus it is advantageous for the live-room viewer to better know the object to be presented corresponding to the target object identification information, and it is advantageous to better assist the live-room viewer to make a decision.

Based on the related content of the above steps 31 to 32, it can be seen that after the historical comment information of the object to be presented corresponding to the target object identification information is obtained, one or more pieces of comment information to be used may be first extracted from the historical comment information of the object to be presented corresponding to the target object identification information, such that such comment information to be used can express experience feelings given by experiencers for the object to be presented; and then based on such comment information to be used, comment information corresponding to the target object identification information is determined, such that the comment information can represent the experience feelings expressed by such comment information to be used for the object to be presented, and accordingly after the comment information is presented to the live-room viewer, the live-room viewer can know the experience feelings related to the object to be presented from the comment information, and thus it is advantageous for the live-room viewer to better know the object to be presented, and it is advantageous to better assist the live-room viewer to make a decision for the object to be presented.

In addition, the embodiment of the present application does not limit the comment presentation process of the comment information corresponding to the above target object identification information, for example, when the comment information includes only one comment content to be presented, the comment content to be presented may be directly presented in the above video playback page. For another example, when the comment information includes a plurality of comment contents to be presented, these comment contents to be presented may be played back by turns in the video playback page.

In addition, the embodiment of the present application does not limit the presentation order of the above target object identification information and comment information corresponding to the target object identification information, which may specifically be, for example: first presenting the target object identification information in the above video playback page, so as to, after it is determined that a preset comment adding condition (for example, an explanation duration of the live room anchor for the object to be presented corresponding to the target object identification information reaches a preset first duration threshold) has been met, add comment information corresponding to the target object identification information to the video playback page, such that both the target object identification information and the comment information corresponding to the target object identification information can be concurrently presented on the video playback page. For another example, it may also be: simultaneously adding, in the above video playback page, the target object identification information and the comment information corresponding to the target object identification information, such that both the target object identification information and the comment information corresponding to the target object identification information can be concurrently presented on the video playback page.

It should be noted that the embodiment of the present application does not limit the process of adding the above comment information corresponding to the target object identification information, which may be implemented, for example, by using a preset dynamic effect (for example, a dynamic effect such as inserting from left to right).

In addition, the embodiment of the present application does not limit a presentation end condition of the above comment information corresponding to the target object identification information, which may specifically be, for example: deleting the comment information from the above video playback page when it is determined that a presentation duration of the comment information reaches a preset second duration threshold. For another example, it may also be: deleting the comment information corresponding to the target object identification information from the video playback page while deleting the target object identification information from the video playback page, such that the comment information can disappear with the disappearance of the target object identification information.

The embodiment of the present application does not limit the manner of presenting the above comment information corresponding to the target object identification information, which may specifically be, for example: presenting, in a comment presentation area of the above video playback page, the comment information corresponding to the target object identification information.

The above comment presentation area is used for presenting the above comment information corresponding to the target object identification information. For example, when the above video playback page is the live page 200 shown in Fig. 2, and the comment information is the string "I really love the received cup since it is of good quality! I will repurchase it!", the comment presentation area may be the area 201 shown in Fig. 2, such that the live-room viewer can view the comment information from the area 201.

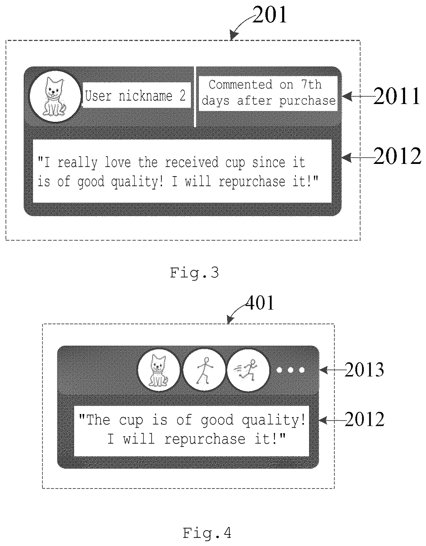

In addition, the embodiment of the present application does not limit the implementation of the above comment presentation area, which may be implemented, for example, by using an area 201 shown in Fig. 3 or an area 401 shown in Fig. 4.

In addition, the above comment presentation area may comprise an evaluation element presentation area and a comment content presentation area. The comment content presentation area is used for presenting the above comment information corresponding to the target object identification information, for example, the comment content presentation area may be a second sub-area 2012 shown in Fig. 3.

The evaluation element presentation area is used for presenting element description information of the comment information. The element description information refers to some element contents related to the comment information, for example, these element contents may include a comment poster identification (for example, an avatar, a nickname, and the like), comment posting time characterization information (for example, "commented on 7th days after purchase" shown in Fig. 3, an expression similar to "5 days ago", or the like), comment popularity characterization information, comment acceptance characterization data (for example, the number of likes), and the like.

In addition, the present embodiment does not limit the manner of representing the above evaluation element presentation area, for example, in some application scenarios (for example, when a comment content determined based on one experience comment posted by a certain experiencer is presented on the above video playback page), the evaluation element presentation area may use a first sub-area 2011 shown in Fig. 3, such that the evaluation element presentation area can have therein presented element description information (for example, a user nickname, a user avatar, a user comment posting time, and the like of the experiencer) corresponding to the comment content. The first sub-area 2011 has therein presented an avatar of a comment poster, a nickname of the comment poster, and comment posting time characterization information of the comment poster.

For another example, in some other application scenarios (for example, when an aggregation result of some similar experience comments are presented on the above video playback page), the evaluation element presentation area may be implemented by using a third sub-area 2013 shown in Fig. 4, such that the evaluation element presentation area can have therein presented an element aggregation result (for example, avatars of posters of the similar experience comments, etc.) corresponding to the comment contents. The third sub-area 2013 has therein presented avatars of comment posters of experience comments that can express the semantic " The cup is of good quality! I will repurchase it!".

Based on the related content of the above comment presentation area, it can be seen that when the comment presentation area comprises an evaluation element presentation area (for example, the first sub-area 2011 shown in Fig. 3) and a comment content presentation area (for example, the second sub-area 2012 shown in Fig. 3), an information presentation manner of the comment presentation area may specifically be: presenting, in the comment content presentation area, the comment information corresponding to the target object identification information (for example, a string "I really love the received cup since it is of good quality! I will repurchase it!" shown in Fig. 3), and presenting, in the evaluation element presentation area, the element description information (for example, a string "commented on 7th days after purchase", a string "user nickname 2", and the like shown in Fig. 3) of the comment information.

In addition, the embodiment of the present application does not limit a page deployment position of the above comment presentation area, for example, in order to facilitate the live-room viewer to better know which object to be presented the comment content presented in the comment presentation area is used for evaluating, the comment presentation area may be deployed around object identification information of its corresponding object to be presented. Based on this, the embodiment of the present application provides a possible implementation of the page deployment position of the above comment presentation area, which is specifically: a position of the comment presentation area in the above video playback page is adjacent to a position of the target object identification information in the video playback page. For ease of understanding, the description is made below in conjunction with an example.

As an example, when the above video playback page is the page 200 shown in Fig. 2, and the target object identification information is the information shown in the object presentation area 202 shown in Fig. 2, the comment presentation area may be the area 201, such that a position difference between a position of the comment presentation area in the video playback page and a position of the target object identification information in the video playback page is less than a preset distance threshold, thereby enabling the live-room viewer to know, from the comment presentation area, an experience feeling of an experiencer for the object to be presented corresponding to the target object identification information, while viewing the target object identification information.

In fact, in some cases, the above video playback page may have therein displayed a plurality of pieces of object identification information (for example, the information shown in the object presentation area 202, the information shown in the object presentation area 203, and the information shown in the object presentation area 204 in Fig. 2), and thus, in order that the object identification information associated with the comment content shown in the above comment presentation area can be presented, the embodiment of the present application provides another possible implementation of the page deployment position of the above comment presentation area, in which, when the above "at least one piece of object identification information" is presented in a horizontal row in a preset order, and a position of the target object identification information in the video playback page is an edge position (for example, a left edge position or a right edge position) of the horizontal row, the page deployment position of the comment presentation area may specifically be: a position of the comment presentation area in the video playback page is above the position of the target object identification information in the video playback page. The preset order can be set in advance. For ease of understanding, the description is made below in conjunction with Fig. 2.

As an example, when the above video playback page is the page 200 shown in Fig. 2, the above "at least one piece of object identification information" includes the information shown in the object presentation area 202, the information shown in the object presentation area 203, and the information shown in the object presentation area 204 in Fig. 2, the target object identification information is the information shown in the object presentation area 202 in Fig. 2, and the above comment presentation area is the area 201, based on Fig. 2, it can be seen that three areas, namely, the object presentation area 202, the object presentation area 203, and the object presentation area 204, are presented in a horizontal row in an order from left to right, such that the information shown in the object presentation area 202, the information shown in the object presentation area 203, and the information shown in the object presentation area 204 are presented in the horizontal row in the order from left to right, and thus, the purpose that the above "at least one piece of object identification information" is presented in a horizontal row in a preset order can be achieved; the object presentation area 202 is located at a left edge position of the horizontal row, thus the information shown in the object presentation area 202 is at the left edge position of the horizontal row; and the area 201 is right above the object presentation area 202, and a position interval between the area 201 and the object presentation area 202 is less than a preset interval threshold, thus a distance between the comment content shown in the area 201 and the object identification information shown in the object presentation area 202 is relatively short, and accordingly enabling the live-room viewer to know an experience feeling related to the object to be presented corresponding to the object presentation area 202 more conveniently, and it is advantageous to improve the user experience.

In fact, in some application scenarios, the live-room viewer may want to view more comment contents, and thus in order to satisfy the user requirement, the embodiment of the present application further provides another possible implementation of the above comment presentation area, in which the comment presentation area may be used not only for directly presenting the comment information corresponding to the above target object identification information, but also for presenting, in response to a trigger operation on the comment presentation area, an object comment presentation page for the object to be presented corresponding to the target object identification information. The object comment presentation page is used for presenting experience comments posted by some experiencers for the object to be presented. As can be seen, when the historical comment information of the object to be presented corresponding to the above target object identification information includes experience comments posted by some experiencers for the object to be presented, the object comment presentation page may include the historical comment information.

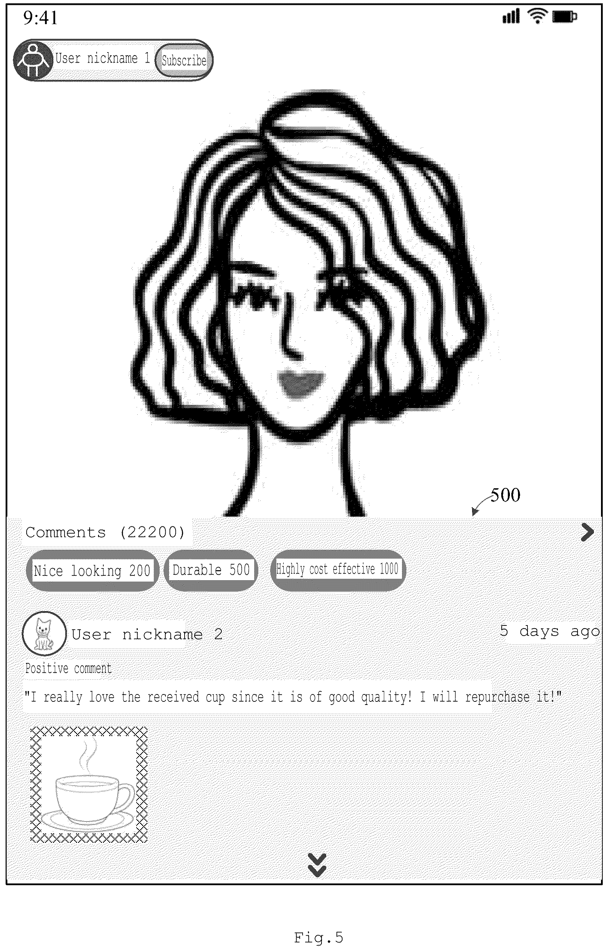

In addition, the embodiment of the present application does not limit the implementation of the above object comment presentation page, which may specifically be, for example: the comment area (for example, an area shown in the page 500 in Fig. 5) in the item detail page for the object to be presented corresponding to the target object identification information.

In addition, the embodiment of the present application does not limit the presentation of the above object comment presentation page, for example, in order that the purpose of viewing the object comment presentation page on the premise that the video playback process is not interrupted can be achieved, the object comment presentation page may be presented in a half-screen drop-up page (for example, the page 500 shown in Fig. 5).

Furthermore, the embodiment of the present application does not limit the above "trigger operation", which may be, for example, a click operation or a swipe operation.

Based on the related content of the above object comment presentation page, it can be seen that when the above video playback page has therein presented the comment presentation area (for example, the area 201 shown in Fig. 2), the live-room viewer can not only know the comment information corresponding to the target object identification information from the comment presentation area, but also open the object comment presentation page (for example, the page 500 shown in Fig. 5) of the object to be presented corresponding to the target object identification information by performing a trigger operation (for example, a click operation) on the comment presentation area, such that the live-room viewer can know more experience comments posted for the object to be presented from the object comment presentation page.

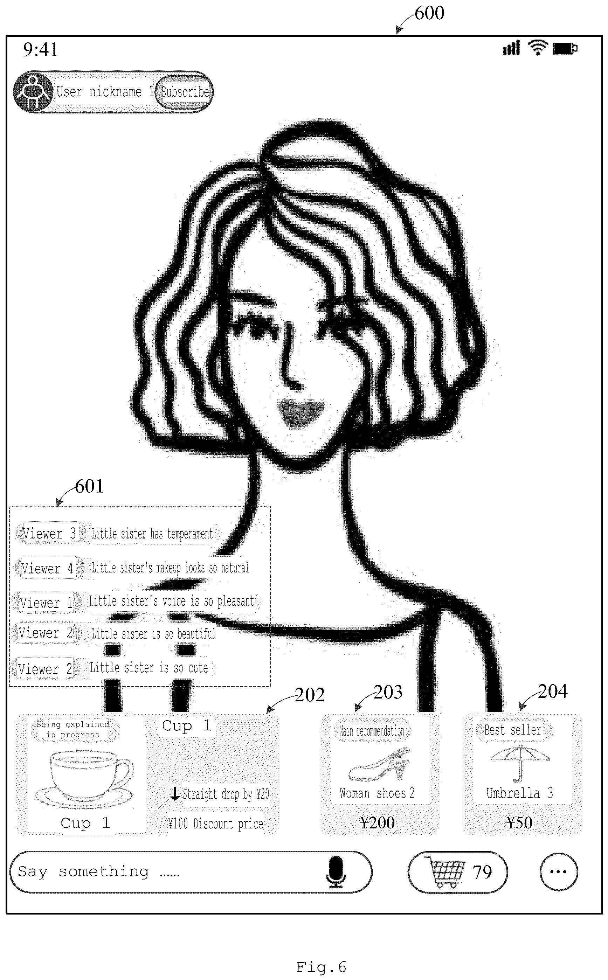

In fact, since the comment presentation area which is in the presentation state needs to occupy some position areas in the above video playback page, in order to better satisfy the area occupation requirement of the comment presentation area, some information presentation areas (for example, a bullet subtitle area 401 shown in Fig. 6) in the video playback page may be resized to ensure that the video playback page can satisfy the area occupation requirement of the comment presentation area as much as possible.

Based on the above requirement, the embodiment of the present application further provides a presentation process of the above comment presentation area, in which, when the target object identification information and an information area to be adjusted are presented on the video playback page, the presentation process of the comment presentation area may specifically be: if it is determined that there is an intersection between an area occupied by the information area to be adjusted on the video playback page and a predetermined use area of the comment presentation area on the video playback page, zooming out the area occupied by the information area to be adjusted on the video playback page, and adding the comment presentation area on the video playback page, to avoid occurrence of obstruction between the comment presentation area and the information area to be adjusted that are presented on the video playback page.

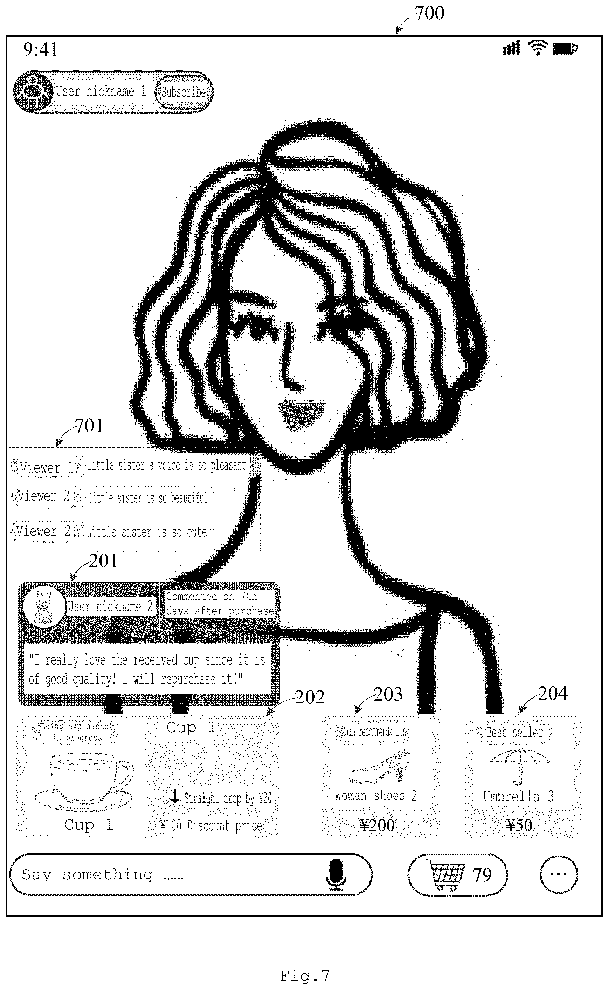

The information area to be adjusted refers to a page area to be zoomed-out when the comment presentation area is added onto the video playback page. For example, when the above video playback page is a page 600 shown in Fig. 6, and the above target object identification information is information shown in an object presentation area 202 in Fig. 6, the information area to be adjusted may be a bullet subtitle presentation area 601 shown in Fig. 6. At this time, if the predetermined use area of the comment presentation area on the video playback page is an area 201 shown in Fig. 7, because there is an area coincidence between the bullet subtitle presentation area 601 and the area 201, and accordingly there is an intersection between the area occupied by the information area to be adjusted on the video playback page and the area used by the comment presentation area on the video playback page, in order to satisfy the area occupation requirement of the comment presentation area as much as possible, the size of the information area to be adjusted can be zoomed out while the comment presentation area is added onto the video playback page, to obtain an area 701 shown in Fig. 7, such that there is no area coincidence between the area 701 and the area 201, and thus occurrence of obstruction between the comment presentation area and the information area to be adjusted which are concurrently presented on the video playback page can be effectively avoided.

In addition, after the size of the above information area to be adjusted is zoomed out, the information amount presented in the information area to be adjusted will also decrease accordingly. For example, compared to the bullet subtitle presentation area 601 shown in Fig. 6, the area 701 shown in Fig. 7 has therein reduced two bullet subtitles, and posting times of these two bullet subtitles are earlier than those of the bullet subtitles displayed in the area 701.

In addition, the embodiment of the present application does not limit the process of adding the above comment presentation area, which may be implemented, for example, by using a preset dynamic effect (for example, a dynamic effect such as inserting from left to right).

Based on the related content of the above steps 11 to 12, it can be seen that, for the comment presentation method provided in the embodiment of the present application, a video playback page (for example, a live video) can be presented on electronic devices used by some users, such that, on the video playback page, not only object identification information for respective objects to be presented (for example, respective items) is presented, but also comment information corresponding to target object identification information satisfying a preset condition (for example, object identification information of an object to be presented which is in a state of being explained) is presented if the target object identification information exists in the object identification information, such that a viewer of the video playback page can view the comment information on the premise that an additional operation does not need to be performed, and thus the operation complexity for the viewer to view the comment information can be effectively reduced, and it is advantageous to improve the user experience.

In addition, since the comment information is determined according to historical comment information of an object to be presented corresponding to the target object identification information, the comment information can represent experience feelings for the object to be presented of experiencers (for example, purchasers or users) of the object to be presented, and accordingly enabling a viewer of the video playback page to directly know the experience feelings from the video playback page, and then enabling the viewer to know these experience feelings on the premise that an additional operation does not need to be performed, and thus the viewer can better make a decision (for example, whether to experience the object to be presented corresponding to the target object identification information) based on the comment information without leaving the video playback page, and it is possible to effectively improve the user experience (for example, live-room item purchasing experience, and the like) of the viewer.

Based on the comment presentation method provided in the embodiment of the present application, an embodiment of the present application also provides a comment presentation apparatus, which is explained and described in conjunction with the drawings. Please refer to the above method embodiment for technical details of the comment presentation apparatus provided in the embodiment of the present application.

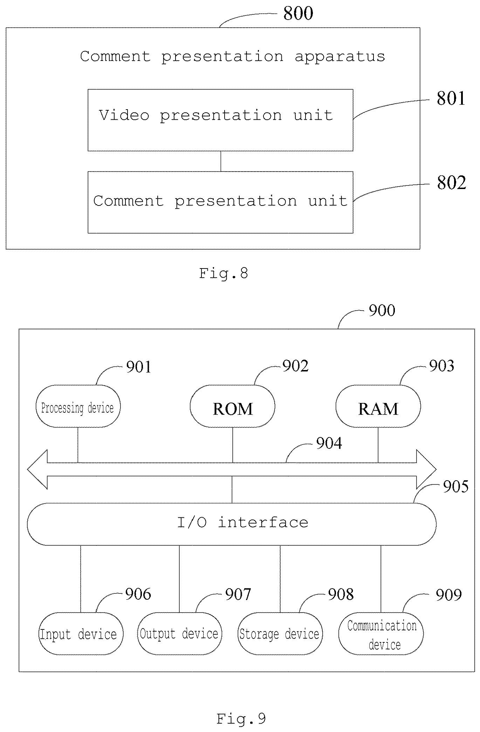

Referring to Fig. 8, it is a schematic structural diagram of a comment presentation apparatus according to an embodiment of the present application.

The comment presentation apparatus 800 provided in the embodiment of the present application comprises:
a video presentation unit 801, configured to present a video playback page, which comprises at least one piece of object identification information; wherein the object identification information is determined according to attribute information of an object to be presented corresponding to the video playback page;
a comment presentation unit 802, configured to, if target object identification information satisfying a preset condition exists in the at least one piece of object identification information, present, in the video playback page, comment information corresponding to the target object identification information; wherein the comment information is determined according to historical comment information of an object to be presented corresponding to the target object identification information.

In a possible implementation, the comment presentation unit 802 is specifically configured to: present, in a comment presentation area of the video playback page, the comment information corresponding to the target object identification information.

In a possible implementation, the comment presentation area comprises an evaluation element presentation area and a comment content presentation area; and
the comment presentation unit 802 is specifically configured to: present, in the comment content presentation area, the comment information corresponding to the target object identification information; and present, in the evaluation element presentation area, element description information of the comment information.

In a possible implementation, a position of the comment presentation area in the video playback page is adjacent to a position of the target object identification information in the video playback page.

In a possible implementation, the at least one piece of object identification information is presented in a horizontal row in a preset order; the position of the target object identification information in the video playback page is an edge position of the horizontal row; and the position of the comment presentation area in the video playback page is above the position of the target object identification information in the video playback page.

In a possible implementation, the comment information corresponding to the target object identification information is determined according to at least one comment content satisfying a preset presentation condition in the historical comment information;
the comment presentation apparatus 800 further comprises:
a response unit configured to, in response to a trigger operation on the comment presentation area, present an object comment presentation page for the object to be presented corresponding to the target object identification information; wherein the object comment presentation page comprises the historical comment information of the object to be presented corresponding to the target object identification information.

In a possible implementation, the comment information corresponding to the target object identification information is determined according to comment information to be used; the comment information to be used is extracted from the historical comment information of the object to be presented corresponding to the target object identification information; and a semantic similarity between the comment information corresponding to the target object identification information and the comment information to be used satisfies a preset semantic similarity condition.

In a possible implementation, the comment information corresponding to the target object identification information is intercepted from the comment information to be used according to a preset presentation character number threshold; and a character number of the comment information corresponding to the target object identification information does not exceed the presentation character number threshold.

In a possible implementation, the comment information corresponding to the target object identification information comprises a semantic abstract extracted from the comment information to be used.

In a possible implementation, the comment information corresponding to the target object identification information comprises keywords extracted from the comment information to be used.

In a possible implementation, the comment information to be used is determined from at least one piece of similar comment information; the at least one piece of similar comment information is determined from the historical comment information of the object to be presented corresponding to the target object identification information; and a content similarity between any two pieces of the similar comment information satisfies a preset content similarity condition.

In a possible implementation, the comment information to be used is screened from the historical comment information of the object to be presented corresponding to the target object identification information according to at least one screening reference factor.

In a possible implementation, the comment information corresponding to the target object identification information comprises a plurality of comment contents to be presented; and
the comment presentation unit 802 is specifically configured to: play back by turns, in the video playback page, the plurality of comment contents to be presented.

In a possible implementation, if object identification information of an object to be presented which is in a state of being explained exists in the at least one piece of object identification information, the target object identification information is the object identification information of the object to be presented which is in the state of being explained; and
if object identification information of an object to be presented which is in the state of being explained does not exist in the at least one piece of object identification information, the target object identification information is object identification information of an object to be presented satisfying a preset popularity condition, or the target object identification information is object identification information of an object to be presented satisfying a preset recommendation condition.

Based on the related content of the above comment presentation apparatus 800, it can be seen that, for the comment presentation apparatus 800 provided in the embodiment of the present application, a video playback page (for example, a live video) is presented, such that not only object identification information for respective objects to be presented (for example, respective items) is presented on the video playback page, and if target object identification information satisfying a preset condition (for example, object identification information of an object to be presented which is in a state of being explained) exists in the object identification information, but also comment information corresponding to the target object identification information is presented on the video playback page, and accordingly a viewer of the video playback page can view the comment information on the premise that an additional operation does not need to be performed, and thus the operation complexity for the viewer to view the comment information can be effectively reduced, and it is advantageous to improve the user experience.

In addition, since the comment information is determined according to historical comment information of an object to be presented corresponding to the target object identification information, the comment information can represent experience feelings for the object to be presented of experiencers (for example, purchasers or users) of the object to be presented, and accordingly enabling a viewer of the video playback page to directly know the experience feelings from the video playback page, and then enabling the viewer to know these experience feelings on the premise that an additional operation does not need to be performed, and thus the viewer can better make a decision (for example, whether to experience the object to be presented corresponding to the target object identification information) based on the comment information without leaving the video playback page, and it is possible to effectively improve the user experience (for example, live-room item purchasing experience, and the like) of the viewer.

It should be noted that, in the embodiment of the present application, the above "element description information", "experience evaluation", "comment information", and the like do not relate to user sensitive information, wherein the "element description information", "experience evaluation", and other information are obtained and used after authorization by a user, and the "comment information" and other information are determined after authorization by the user. In one example, before the above "element description information" and "experience evaluation" are obtained, a corresponding interface has displayed thereon prompt information related to obtaining data use authorization, by which the user is notified of a type, usage scope, usage scenario, and the like of personal information involved in the present disclosure in an appropriate manner according to related laws and regulations, such that the user determines whether to agree to authorization based on the prompt information. It can be understood that the above notification and process of obtaining the user authorization are only illustrative and not intended to limit the implementation of the present disclosure, and other manners satisfying the related laws and regulations may be applied to the implementation of the present disclosure.

In addition, an embodiment of the present application further provides an electronic device comprising a processor and a memory: wherein the memory is configured to store instructions or a computer program; and the processor is configured to execute the instructions or computer program in the memory, to cause the electronic device to perform any implementation of the comment presentation method according to the embodiment of the present application.

Referring to Fig. 9, it illustrates a schematic structural diagram of an electronic device 900 suitable for implementing an embodiment of the present disclosure. The terminal device in the embodiment of the present disclosure may include, but is not limited to, a mobile terminal such as a mobile phone, a laptop, a digital broadcast receiver, a PDA (Personal Digital Assistant), a PAD (tablet), a PMP (Portable Multimedia Player), and a vehicle-mounted terminal (for example, a vehicle-mounted navigation terminal), and a fixed terminal such as a digital TV and a desktop computer. The electronic device shown in Fig. 9 is only an example, and should not bring any limitation to the functions and the usage scope of the embodiment of the present disclosure.

As shown in Fig. 9, the electronic device 900 may include a processing device (for example, a central processor, a graphics processor, etc.) 901 that may perform various appropriate actions and processes according to a program stored in a read-only memory (ROM) 902 or a program loaded from a storage device 908 into a random access memory (RAM) 903. In the RAM 903, various programs and data required for the operation of the electronic device 900 are also stored. The processing device 901, ROM 902, and RAM 903 are connected to each other via a bus 904. An input/output (I/O) interface 905 is also connected to the bus 904.

Generally, the following devices may be connected to the I/O interface 905: an input device 906 including, for example, a touch screen, touch pad, keyboard, mouse, camera, microphone, accelerometer, gyroscope, etc.; an output device 907 including, for example, a liquid crystal display (LCD), speaker, vibrator, etc.; the storage device 908 including, for example, a magnetic tape, hard disk, etc.; and a communication device 909. The communication device 909 may allow the electronic device 900 to communicate with other devices wirelessly or by wire to exchange data. While Fig. 9 illustrates the electronic device 900 having various devices, it should be understood that not all illustrated devices are required to be implemented or provided. More or fewer devices may be alternatively implemented or provided.

In particular, according to the embodiment of the present disclosure, the processes described above with reference to the flow diagrams may be implemented as a computer software program. For example, the embodiment of the present disclosure comprises a computer program product, which comprises a computer program carried on a non-transitory computer-readable medium, wherein the computer program contains program codes for performing the method illustrated by any of the flow diagrams. In such an embodiment, the computer program may be downloaded and installed from a network through the communication device 909, or installed from the storage device 908, or installed from the ROM 902. The computer program, when executed by the processing device 901, performs the above functions defined in the method of the embodiment of the present disclosure.

The electronic device provided in the embodiment of the present disclosure and the method provided in the embodiment belong to the same inventive concept, and for technical details that are not described in detail in this embodiment, reference can be made to the above embodiment, and this embodiment has the same beneficial effects as the above embodiment.

An embodiment of the present application further provides a computer-readable medium having therein stored instructions or a computer program which, when executed on a device, cause(s) the device to perform any implementation of the comment presentation method according to the embodiment of the present application.

It should be noted that the above computer-readable medium of the present disclosure may be a computer-readable signal medium or a computer-readable storage medium or any combination of the above two. The computer-readable storage medium may be, for example, but is not limited to, an electronic, magnetic, optical, electromagnetic, infrared, or semiconductor system, apparatus, or device, or any combination of the foregoing. More specific examples of the computer-readable storage medium may include, but are not limited to: an electrical connection having one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing. In the present disclosure, the computer-readable storage medium may be any tangible medium containing or storing a program, wherein the program can be used by or in conjunction with an instruction execution system, apparatus, or device. However, in the present disclosure, the computer-readable signal medium may include a data signal propagated in baseband or as part of a carrier wave, in which computer-readable program codes are carried. Such a propagated data signal may take a variety of forms, including, but not limited to, an electromagnetic signal, optical signal, or any suitable combination of the forgoing. The computer-readable signal medium may also be any computer-readable medium other than the computer-readable storage medium, wherein the computer-readable signal medium can send, propagate, or transmit a program for use by or in conjunction with an instruction execution system, apparatus, or device. The program codes contained on the computer-readable medium may be transmitted using any appropriate medium, including but not limited to: a wire, an optical cable, RF (Radio Frequency), etc., or any suitable combination of the foregoing.

In some implementations, a client and a server may communicate using any currently known or future developed network protocol, such as HTTP (Hyper Text Transfer Protocol), and may be interconnected with any form or medium of digital data communication (e.g., a communication network). Examples of the communication network include a local area network ("LAN"), a wide area network ("WAN"), an internet (e.g., the Internet), and a peer-to-peer network (e.g., an ad hoc peer-to-peer network), as well as any currently known or future developed network.

The above computer-readable medium may be contained in the above electronic device; or may exist separately without being assembled into the electronic device.

The above computer-readable medium has one or more programs carried thereon, wherein the above one or more programs, when executed by the electronic device, cause the electronic device to perform the above method.

Computer program codes for performing the operation of the present disclosure may be written in one or more programming languages or a combination thereof, wherein the above programming language includes but is not limited to an object-oriented programming language such as Java, Smalltalk, and C++, and also includes a conventional procedural programming language, such as a "C" language or a similar programming language. The program codes may be executed entirely on a user's computer, partly on a user's computer, as a stand-alone software package, partly on a user's computer and partly on a remote computer, or entirely on a remote computer or server. In a case where a remote computer is involved, the remote computer may be connected to a user's computer through any type of network, including a local area network (LAN) or a wide area network (WAN), or may be connected to an external computer (for example, through the Internet using an Internet service provider).

The flow diagrams and block diagrams in the drawings illustrate the possibly implemented architecture, functions, and operations of the system, method and computer program product according to various embodiments of the present disclosure. In this regard, each block in the flow diagrams or block diagrams may represent a module, a program segment, or a part of the codes, which includes one or more executable instructions for implementing a specified logical function. It should also be noted that, in some alternative implementations, functions noted in blocks may occur in a different order from those noted in the drawings. For example, two blocks shown in succession may, in fact, be executed substantially concurrently, or they may sometimes be executed in a reverse order, which depends upon the functions involved. It will also be noted that each block in the block diagrams and/or flow diagrams, and a combination of the blocks in the block diagrams and/or flow diagrams, can be implemented by a special-purpose hardware-based system that performs specified functions or operations, or by a combination of special-purpose hardware and computer instructions.

The involved units described in the embodiments of the present disclosure may be implemented by software or hardware. The name of the unit/module does not, in some cases, constitute a limitation on the unit itself.

The functions described above herein may be executed, at least partially, by one or more hardware logic components. For example, without limitation, a hardware logic component of an exemplary type that may be used includes: a field programmable gate array (FPGA), an application specific integrated circuit (ASIC), an application specific standard parts (ASSP), a system on chip (SOC), a complex programmable logic device (CPLD), and the like.

In the context of this disclosure, a machine-readable medium may be a tangible medium, which can contain or store a program for use by or in conjunction with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of the machine-readable storage medium include an electrical connection based on one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing.

It should be noted that, in this description, the embodiments are described in a progressive manner, and each embodiment focuses on differences from other embodiments, and same and similar parts among the embodiments may be referred to each other. For the system or the apparatus disclosed by the embodiment, the description is simple since it corresponds to the method disclosed by the embodiment, such that the relevant points can be referred to the description of the method section.

It should be understood that, in the present application, "at least one" means one or more, "a plurality" refers to two or more. "And/or", which is used for describing an association relationship between associated objects, indicates that there may be three relationships, for example, "A and/or B" may represent three cases: the presence of A alone, the presence of B alone, and the presence of A and B simultaneously, wherein A and B may be singular or plural. A character "/" generally indicates that preceding and succeeding objects associated are in an "or" relationship. "At least one of the following items" or its similar expression refers to any combination of these items, including any combination of the singular or plural items. For example, at least one of a, b, or c, may represent: a, b, c, "a and b", "a and c", "b and c", or "a and b and c", where a, b and c may be single or plural.

It should also be noted that, relational terms such as "first" and "second", herein, are only used for distinguishing one entity or operation from another entity or operation without necessarily requiring or implying any such actual relation or order between these entities or operations. Moreover, the term "comprise", "include", or any other variation thereof, is intended to encompass a non-exclusive inclusion, such that a process, method, article, or device comprising a list of elements not only includes those elements but also includes other elements not expressly listed, or also includes elements inherent to such a process, method, article, or device. Without more limitations, an element defined by a statement "comprising a ···" does not exclude the presence of another identical element in a process, method, article, or device that includes the element.

The steps of the method or algorithm described in conjunction with the embodiments disclosed herein may be directly implemented using hardware, a software module executed by a processor, or a combination of the two. The software module may be provided in a random access memory (RAM), memory, read-only memory (ROM), electrically programmable ROM, electrically erasable programmable ROM, register, hard disk, removable disk, CD-ROM, or any other form of storage medium known in the art.

The above description of the disclosed embodiments enables those skilled in the art to implement or use the present application. Various modifications to these embodiments will be readily apparent to those skilled in the art, and the general principles defined herein may be implemented in other embodiments without departing from the spirit or scope of the present application. Therefore, the present application is not intended to be limited to these embodiments shown herein but to conform to the widest scope consistent with the principles and novel features disclosed herein.

## Claims

1. A comment presentation method, comprising:
presenting a video playback page, which comprises at least one piece of object identification information; wherein the object identification information is determined according to attribute information of an object to be presented corresponding to the video playback page; and
if target object identification information satisfying a preset condition exists in the at least one piece of object identification information, presenting, in the video playback page, comment information corresponding to the target object identification information; wherein the comment information is determined according to historical comment information of an object to be presented corresponding to the target object identification information.

2. The method according to claim 1, wherein the presenting, in the video playback page, comment information corresponding to the target object identification information comprises:
presenting, in a comment presentation area of the video playback page, the comment information corresponding to the target object identification information.

3. The method according to claim 2, wherein the comment presentation area comprises an evaluation element presentation area and a comment content presentation area;
the presenting comment information corresponding to the target object identification information comprises:
presenting, in the comment content presentation area, the comment information corresponding to the target object identification information; and
the method further comprises:
presenting, in the evaluation element presentation area, element description information of the comment information.

4. The method according to claim 2, wherein a position of the comment presentation area in the video playback page is adjacent to a position of the target object identification information in the video playback page.

5. The method according to claim 4, wherein the at least one piece of object identification information is presented in a horizontal row in a preset order;
the position of the target object identification information in the video playback page is an edge position of the horizontal row; and
the position of the comment presentation area in the video playback page is above the position of the target object identification information in the video playback page.

6. The method according to claim 2, wherein the comment information corresponding to the target object identification information is determined according to at least one comment content satisfying a preset presentation condition in the historical comment information; and
the method further comprises:
in response to a trigger operation on the comment presentation area, presenting an object comment presentation page for the object to be presented corresponding to the target object identification information; wherein the object comment presentation page comprises the historical comment information of the object to be presented corresponding to the target object identification information.

7. The method according to claim 1, wherein the comment information corresponding to the target object identification information is determined according to comment information to be used; the comment information to be used is extracted from the historical comment information of the object to be presented corresponding to the target object identification information; and a semantic similarity between the comment information corresponding to the target object identification information and the comment information to be used satisfies a preset semantic similarity condition.

8. The method according to claim 7, wherein the comment information corresponding to the target object identification information is intercepted from the comment information to be used according to a preset presentation character number threshold; and a character number of the comment information corresponding to the target object identification information does not exceed the presentation character number threshold;
or,
the comment information corresponding to the target object identification information comprises a semantic abstract extracted from the comment information to be used;
or,
the comment information corresponding to the target object identification information comprises keywords extracted from the comment information to be used.

9. The method according to claim 7, wherein the comment information to be used is determined from at least one piece of similar comment information; the at least one piece of similar comment information is determined from the historical comment information of the object to be presented corresponding to the target object identification information; and a content similarity between any two pieces of the similar comment information satisfies a preset content similarity condition;
or,
the comment information to be used is screened from the historical comment information of the object to be presented corresponding to the target object identification information according to at least one screening reference factor.

10. The method according to claim 1, wherein the comment information corresponding to the target object identification information comprises a plurality of comment contents to be presented; and
the presenting, in the video playback page, comment information corresponding to the target object identification information comprises:
playing back by turns, in the video playback page, the plurality of comment contents to be presented.

11. The method according to any of claims 1-10, wherein if object identification information of an object to be presented which is in a state of being explained exists in the at least one piece of object identification information, the target object identification information is the object identification information of the object to be presented which is in the state of being explained; and
if object identification information of an object to be presented which is in the state of being explained does not exist in the at least one piece of object identification information, the target object identification information is object identification information of an object to be presented satisfying a preset popularity condition, or the target object identification information is object identification information of an object to be presented satisfying a preset recommendation condition.

12. A comment presentation apparatus, comprising:
a video presentation unit, configured to present a video playback page, which comprises at least one piece of object identification information; wherein the object identification information is determined according to attribute information of an object to be presented corresponding to the video playback page; and
a comment presentation unit, configured to, if target object identification information satisfying a preset condition exists in the at least one piece of object identification information, present, in the video playback page, comment information corresponding to the target object identification information; wherein the comment information is determined according to historical comment information of an object to be presented corresponding to the target object identification information.

13. An electronic device, comprising: a processor and a memory, wherein
the memory is configured to store instructions or a computer program; and
the processor is configured to execute the instructions or the computer program in the memory to cause the electronic device to perform the method according to any of claims 1-11.

14. A computer-readable medium having stored therein instructions or a computer program which, when executed on a device, cause (s) the device to perform the method according to any of claims 1-11.

15. A computer program product, comprising a computer program carried on a non-transitory computer-readable medium, wherein the computer program comprises program codes for performing the method according to any of claims 1-11.
